**Europäisches Patentamt**

**European Patent Office**

**Office européen des brevets**

(19)

(11) Veröffentlichungsnummer: **0 199 937**
**B1**

(12) **EUROPÄISCHE PATENTSCHRIFT**

(45) Veröffentlichungstag der Patentschrift:
**24.05.89**

(51) Int. Cl.[4]: **B23K 7/10, B23K 9/06,**
**B23K 28/00**

(21) Anmeldenummer: **86103150.8**

(22) Anmeldetag: **08.03.86**

(54) **Verfahren zum automatischen Einstellen der Anfangshöhe eines Brenners.**

(30) Priorität: **02.04.85 DE 3512033**

(43) Veröffentlichungstag der Anmeldung:
**10.12.86 Patentblatt 86/45**

(45) Bekanntmachung des Hinweises auf die Patenterteilung:
**24.05.89 Patentblatt 89/21**

(84) Benannte Vertragsstaaten:
**AT BE CH FR GB IT LI NL SE**

(56) Entgegenhaltungen:
**EP-A- 0 014 613**
**CH-A- 477 943**
**DE-A- 2 840 815**
**DE-A- 2 906 751**
**DE-B- 2 706 232**
**GB-A- 1 414 437**
**US-A- 4 101 754**

**PATENT ABSTRACTS OF JAPAN, Band 7,**
**Nr. 85 (M-206)[1230], 9. April 1983**
**ELEKTRONIK, Nr. 19, 24. September 1982, Seiten 57-60,**
**München; T. WILLIAMSON "Digitalelektronik-optimal**
**entstört"**

(73) Patentinhaber: **MESSER GRIESHEIM GMBH, Hanauer**
**Landstrasse 330, D-6000 Frankfurt/Main 1(DE)**

(72) Erfinder: **Hahn, Günter, Aachener Strasse 10,**
**D-6053 Oberthausen 2(DE)**
Erfinder: **Rasche, Sigurd, Dr., Falkensteiner Strasse 19,**
**D-6233 Kelkheim(DE)**

## Beschreibung

Die Erfindung betrifft ein Verfahren zum automatischen Einstellen der Anfangshöhe eines Brenners nach dem Oberbegriff des Anspruchs 1 und eine Vorrichtung zur Durchführung des Verfahrens nach dem Oberbegriff des Anspruchs 2.

Am Beginn eines mit einer vorzugsweise NC-gesteuerten Brennschneidmaschine durchgeführten Schneid- und/oder Schweißvorganges wird der Brenner von einer über dem Werkstück befindlichen Parkposition auf das Werkstück zubewegt bis der Brenner eine Anfangshöhe erreicht hat, die ein Zünden des Licht-/Plasmabogens ermöglicht. Der Abstand zwischen Brenner bzw. Elektrode und Werkstückoberfläche der zum Zünden des Licht-/Plasmabogens erforderlich ist, ist hierbei von der Art der Zündung, der an Elektrode und Werkstück liegenden Stromstärke, des Schutzgases, des Werkstoffes und dgl. abhängig.

Aus der DE-OS 2 840 815 ist es bekannt, die Anfangshöhe mit einem mechanischen Fühler automatisch einzustellen. Hierzu wird der Fühler mittels einer Höhenverstellung solange gegen das Werkstück bewegt, bis der Fühler die Werkstückoberfläche berührt. Eine Veränderung des Abstandes zwischen Brenner und Werkstückoberfläche kann durch Verschieben eines Befestigungsflansches an dem Fühler eingestellt werden.

Die Einstellung des Fühlers erfolgt hierbei durch das Bedienungspersonal nach vorgegebenen oder empirisch ermittelten Werten. Hierbei muß in der Praxis bei fehlerhafter Einstellung der Einstellvorgang und der Zündvorgang wiederholt werden, was zu großen Maschinennebenzeiten führt. Durch die Anordnung des mechanischen Fühlers in dem Arbeitsraum des Brenners besteht eine erhöhte Kollisionsgefahr mit in dem Arbeitsraum des Brenners befindlichen Spannelementen oder sonstigen Erhöhungen. Weiterhin kann durch Auftreffen des Fühlers auf eine unebene Werkstückoberfläche trotz einwandfrei eingestelltem Abstand zwischen Fühler und Brenner eine Zündung des Licht-/Plasmabogens ausbleiben.

Darüber hinaus ist aus der DE-OS 2 906 751 eine Abstandsregeleinrichtung beim Plasmaschweißen bekanntgeworden, bei dem ein Plasmabrenner mit brennendem Pilotlichtbogen gegen ein Werkstück bewegt wird und die dabei zwischen Brenner, Düse und Werkstück ansteigende Spannung gemessen und mit einem vorgegebenen, von Hand eingestellten, Sollwert verglichen wird. Ist der Sollwert erreicht, wird der Höhenservomotor für den Plasmabrenner gestoppt und die Stromquelle zur Zündung des Plasmabogens mit der Elektrode und dem Werkstück verbunden.

Aus der EP-A1 0 014 613 ist eine Abstandsregeleinrichtung beim Plasmaschneiden bekanntgeworden, bei der ebenfalls ein Plasmabrenner mit brennendem Pilotlichtbogen solange gegen das Werkstück bewegt wird, bis der Pilotlichtbogen das Werkstück berührt und in einem Relaiskreis ein vorbestimmter geringerer Strom fließt. Durch das Relais wird die Plasmabrennerbewegung gestoppt und die Stromquelle zur Zündung des Plasmabogens mit der Elektrode und dem Werkstück verbunden.

Bei beiden bekannten Einrichtungen wird somit durch vorbestimmte Spannungs- bzw. Stromwerte des Pilotlichtbogens die Plasmabrennerbewegung gestoppt und so die Anfangshöhe eingestellt, und zwar bevor ein Zünden des Plasmabogens zwischen Elektrode und Werkstück erfolgt ist. Diese Verfahren gewährleisten somit nicht, daß beim späteren Einschalten der Stromquelle für den Plasmabogen, dieser vorgewählte Abstand auch tatsächlich zu einem Zünden des Plasmabogens führt.

Der Erfindung liegt die Aufgabe zugrunde, die Anfangshöhe eines Licht- oder Plasmabogenbrenners ohne Vorgabe von Sollwerten prozeßgesteuert während der Zündung des Licht-/Plasmabogens einzustellen.

Diese Aufgabe wird bei einem gattungsgemäßen Verfahren durch die kennzeichnenden Merkmale des Anspruchs 1 und bei einer gattungsgemäßen Vorrichtung durch die kennzeichnenden Merkmale des Anspruchs 2 gelöst.

Weiterbildungen der Erfindung sind in den Unteransprüchen angegeben.

Die mit der Erfindung erzielten Vorteile bestehen insbesondere darin, daß die zum Zünden eines Licht-/Plasmabogens erforderliche Anfangshöhe eines Brenners durch das Ausbilden des Licht-/Plasmabogens, d.h. durch den Prozeß selbst gesteuert wird. Beim Zünden des Licht-/Plasmabogens bricht die Leerlaufspannung der Stromquelle schlagartig zusammen und liefert somit ein Spannungssignal, welches genau die Stellung des Brenners über dem Werkstück angibt, bei dem der Licht-/Plasmabogen gezündet hat. Diese Brennerstellung ist selbst bei gleichem Brenner und gleichen Stromquellen nie konstant. Durch die Signalbildung bei der Ausbildung des Licht-/Plasmabogens wird gewährleistet, daß der Brenner auf der gefundenen "Eigenersthöhe" sicher gezündet ist. Dabei wird die Eigenersthöhe selbsttätig ohne Vorgabe von Sollwerten gefunden. Eine Einstellung einer vorgegebenen Anfangshöhe, wie sie bei dem mechanischen Fühler durch das Verschieben des Befestigungsflansches erreicht wird, kann vorteilhaft entfallen.

Durch die Erfassung eines elektrischen Wertes der Stromquelle beim Ausbilden des Licht-/Plasmabogens mit einer einfachen Schaltung bzw. mit einfachen elektrischen/elektronischen Bauteilen wird neben einer störungsunempfindlichen Einstellung der Anfangshöhe ein kollisionsfreier Arbeitsraum ohne mechanische Fühleranordnungen geschaffen. Die Herstellung und Montage einer derartigen Schaltung ist kostengünstig und weist nur eine geringe Baugröße auf. Durch die Anordnung dieser Schaltung im Gehäuse der Stromquelle bleibt der Sensor von prozeßbedingten Beeinflussungen, wie Wärme, Schweißspritzer usw., unbeeinflußt.

Vorzugsweise wird mit dem aus dem Spannungsabfall bzw.
Spannungssprung gebildeten Signal die Brennerbewegung sofort angehalten und die Höhenregelung eingeschaltet Durch diese bevorzugte Steuerung der Brennerbewegung werden die Bearbeitungszeiten verringert.

Selbstverständlich ist es auch möglich mit dem Signal ein Zeitglied zu steuern, das die Brennerbewegung nach einer an diesem Zeitglied voreingestellten Zeit abschaltet

Ein Ausführungsbeispiel der Erfindung ist in der Zeichnung dargestellt und wird im folgenden näher beschrieben.

Es zeigen:

Fig. 1 eine schematisch dargestellte Brennschneidmaschine;

Fig. 2 einen schematischen Übersichtsschaltplan der Vorrichtung zur Durchführung des Verfahrens bei einem Plasmaschneidbrenner mit übertragenem Lichtbogen.

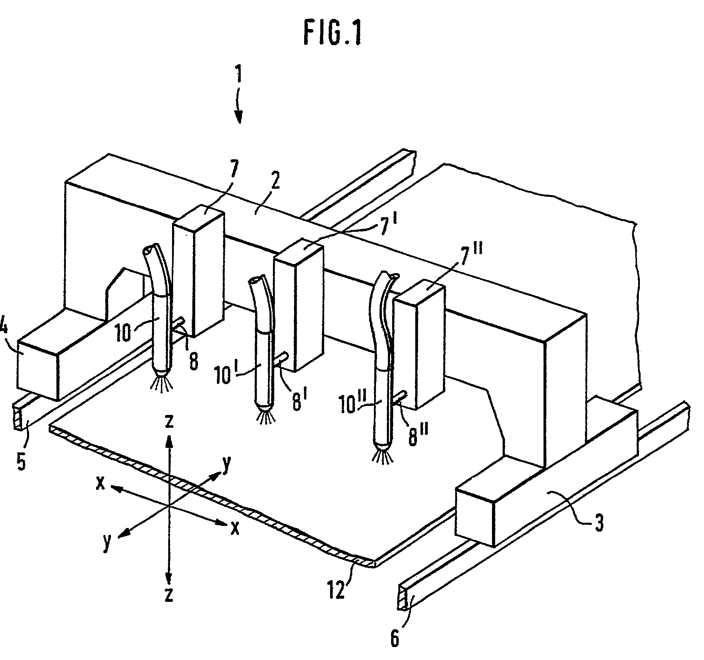

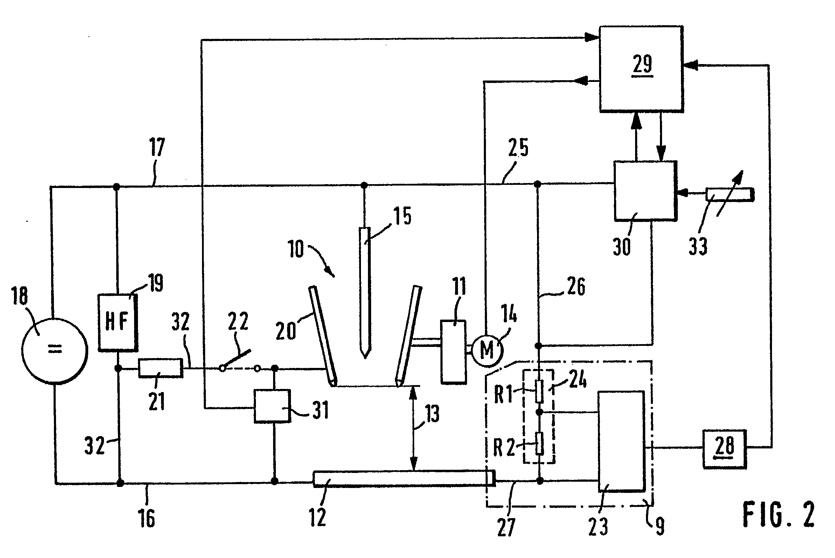

In Fig. 1 ist schematisch eine Brennschneidmaschine 1 dargestellt, die im wesentlichen aus einem Querträger 2 sowie Unterwagen 3 und 4 besteht. Im Unterwagen 4 befinden sich die vollständigen Antriebsaggregate für die Längsbewegung (Pfeilrichtung y). Die Unterwagen 3 und 4 sind auf Laufschienen 5 und 6 in Pfeilrichtung y verfahrbar. Am Querträger 2 sind ferner Querantriebswagen 7, 7', 7" vorgesehen. Diese Antriebswagen 7, 7', 7" stehen mit Antriebsmotoren zum Bewegen der Wagen 7, 7', 7" in Pfeilrichtung x in Verbindung. In der Fig. 1 sind lediglich drei Antriebswagen 7, 7', 7" schematisch dargestellt. Selbstverständlich ist es auch möglich, mehr als drei bzw. nur einen Antriebswagen 7, an der Brennschneidmaschine 1 anzuordnen. An den Antriebswagen 7, 7', 7" ist je ein Brenneraggregat 8, 8', 8" befestigt, an dem jeweils ein Schneidbrenner 10, 10', 10",(beispielsweise WIG-Schweißbrenner, Plasmaschneidbrenner oder dgl.) angeordnet ist, der über eine Höhenverstellung 11 (Fig. 2) in Pfeilrichtung z höhenverstellbar ist.

Die Schneidbrenner 10, 10', 10" werden über das auf einem nicht näher dargestellten Werkstücktisch liegende Werkstück 12 (Fig. 2) numerisch nach Lochband oder fotoelektrisch nach Unterlagen gesteuert.

In Fig. 2 ist ein Plasmaschneidbrenner 10 schematisch dargestellt, der mittels der Höhenverstellung 11, die beispielsweise als Höhenschlitten ausgebildet und an dem nicht näher dargestellten Brenneraggregat einer Plasmaschneidanlage befestigt ist, derart auf ein Werkstück zubewegt, daß sich der Abstand 13 (Pfeilrichtung z) zwischen Brenner 10 und Werkstück 12 verringert. Die Höhenverstellung 11 wird hierbei von einem Motor 14 angetrieben. Die dem Brenner 10 zugeordnete nichtabschmelzende Elektrode 15 und das Werkstück 12 sind über die Leitungen 16, 17 mit einer Stromquelle 18, vorzugsweise einer Gleichspannungsquelle verbunden. Der Brenner 10 arbeitet mit einem übertragenen Lichtbogen. Hierbei wird das Werkstück 12 im Schneidstromkreis 12, 16, 17, 18, 15 als Anode geschaltet, d. h. der positive Pol der Gleichspannungsquelle 18 wird an das zu trennende Werkstück 12 gelegt. Als Kathode dient vorzugsweise eine mit Thoriumzusätzen versehene Wolfram-Elektrode 15. Um eine sichere Zündung des Lichtbogens zwischen Elektrode 15 und Werkstück 12 zu erreichen, zündet man vorzugsweise mit einem Hochfrequenzgerät 19 einen Hilfslichtbogen (Pilotlichtbogen) zwischen der Elektrode 15 und der als Hilfsanode geschalteten Düse 20 des Brenners 10.

Der Vorwiderstand 21 begrenzt den fließenden Strom des Hilfslichtbogens auf einen bestimmten Wert. Das in den Brenner 10 eingegebene Gas oder Gasgemisch wird durch den Hilfslichtbogen ionisiert und bildet eine leitende Strecke zum Werkstück 12. Dadurch, daß der elektrische Widerstand zwischen der Elektrode 15 und dem Werkstück 12 geringer ist als derjenige zwischen der Elektrode 15 und der Düse 20, springt der Lichtbogen bei entsprechendem Abstand 13 auf das Werkstück 12 über,und die an der Stromquelle eingestellte (vorgewählte) Schneidstromstärke wird voll wirksam.

Während der Zündung des Hilfslichtbogens ist der zwischen dem Vorwiderstand 21 und der Düse 20 angeordnete Schalter 22 geschlossen (strichliert dargestellt), so daß der zur Zündung und Aufrechterhaltung des Hilfslichtbogens erforderliche Hilfsstromkreis 32 geschlossen ist. Vorteilhaft wird nach der Zündung des Hauptlichtbogens, vorzugsweise des Plasmaschneidlichtbogens, der Schalter 22 geöffnet, so daß der zur Ionisierung der Gasstrecke zwischen Elektrode 15 und Werkstück 12 erforderliche Hilfslichtbogen verlöscht.

An der Elektrode 15 und dem Werkstück 12 ist ferner ein Sensor 23 über vorzugsweise einen ohmschen Spannungsteiler 24 zur Anfangshöheneinstellung 9 angeschlossen. Der Sensor 23 kann hierbei als an sich bekannte Zenerdiode oder als Spannungskomperator ausgebildet sein. Der Spannungsteiler 24 besteht aus der Reihenschaltung von zwei Widerständen R1, R2, die in dem durch die Leitungen 25, 26, 27 gebildeten Sensorstromkreis angeordnet sind. Der parallel zu dem Widerstand R2 geschaltete Sensor 23 überwacht den Spannungsabfall bzw. Spannungssprung an R2, wenn sich der Plasmabogen ausbildet. Dies ist immer dann der Fall, wenn der Brenner 10 mittels der Höhenverstellung 11 in die Nähe des Werkstücks 12 verfahren wird und bei einem bestimmten Abstand 13 sich der Hauptlichtbogen ausbildet. Der Ausgang des Sensors 23 ist über eine galvanische Trennung 28, beispielsweise einem Optokoppler oder einem Trennverstärker, mit der Motorsteuerung 29 des Motors 14 der Höhenverstellung 11 verbunden. Die galvanische Trennung vermeidet Endschleifen.

Das von dem Sensor 23 gebildete Signal wird der Motorsteuerung 29 zugeführt, der den Motor 14 vorzugsweise abschaltet.

Selbstverständlich ist es auch möglich, das Signal beispielsweise einem Zeitglied zuzuführen, das den Motor 14 über die Motorsteuerung 29 nach einer fest vorgegebenen Zeit abschaltet. Durch das zeitverzögerte Abschalten des Motors 14, der Höhenverstellung 11 kann der Abstand 13 zwischen Elektrode 15 und dem Werkstück 12 vor Einschaltung der Höhenregelung 30 vorteilhaft verkleinert werden. Dies ist immer dann vorteilhaft, wenn nur eine Anfangshöheneinstellung 9 mehreren Plasmaschneidbrennern 10, 10', 10" zugeordnet ist. Hierbei wird der an einem Plasmaschneidbrenner 10 erfaßte Spannungsabfall zur synchronen Steuerung von mehreren Plasmaschneidbrennern 10', 10" verwendet. Unterschiede in beispielsweise der Elektrodenanordnung in den Plasmaschneidbrennern 10, 10', 10" werden durch die über das Zeitglied vorgegebene Verschiebung in Richtung des Werkstückes 12 ausgeglichen.

Vorzugsweise ist jedoch jedem Plasmaschneidbrenner 10, 10', 10" eine Anfangshöheneinstellung 9 zugeordnet.

An dem durch die Leitung 25, 26, 27 gebildeten Stromkreis ist die Höhenregelung 30 parallel geschaltet, die beim Abschalten des Motors 14 von der Motorsteuerung 29 eingeschaltet wird. Der Höhenregelung werden als Istwert die zwischen Elektrode 15 und Werkstück 12 brennende Lichtbogenspannung zugeführt, die mit einem Sollwert verglichen wird, der über einen Sollwertgeber 33 in die Höhenregelung 30 eingegeben wird.

Nach einer vorteilhaften Ausbildung der Erfindung wird das Höhensignal direkt der Höhenregelung 30 zugeführt, die den Brenner 10 über einen Soll-Istwertvergleich der Lichtbogenspannung einfängt und entsprechend dem vorgegebenen Sollwert der Lichtbogenspannung am Sollwertgeber 33 nachregelt.

Um bei Störungen beim Zünden des Pilotlichtbogens eine Kollision zwischen Brenner und Werkstück 12 zu vermeiden, ist vor dem Schalter 22 der aus Hochfrequenzzündgerät 19 und Vorwiderstand 21 gebildeten Iosionseinrichtung eine Überwachungseinrichtung 31 an die Leitung 16 und die Düse 20 angeschlossen, die beim Nichtausbilden des Plasmabogens den Motor 14 abschaltet. Der Ausgang der Überwachungseinrichtung ist hierzu mit der Motorsteuerung 29 verbunden. Vorzugsweise ist die Überwachungseinrichtung als Spannungskomperator ausgebildet, der beim Erreichen einer vorgegebenen Differenzeingangsspannung das Ausgangssignal zum Abstellen des Motors 14 abgibt.

Selbstverständlich ist der Gegenstand der Erfindung nicht auf eine Plasmaschneidanlage beschränkt. Er ist vorteilhaft, insbesondere auch beim mechanisierten WIG-Schweißen, bei Verwendung eines Brenners mit Hilfslichtbogen, einsetzbar.

**Patentansprüche**

1. Verfahren zum automatischen Einstellen der Anfangshöhe (13) eines Licht- oder Plasmabogenbrenners, vorzugsweise eines Plasmaschneidbrenners (10), bei dem der Brenner (10) mittels einer Höhenverstellvorrichtung (11) gegen das Werkstück (12) bewegt wird, ein Höhensignal zur Einstellung der Anfangshöhe (13) gebildet und die Bewegung des Brenners (10) durch das Höhensignal angehalten wird, wobei Brennerelektrode (15) und Werkstück an eine den Licht- oder Plasmabogen versorgende Stromquelle (18) angeschlossen sind, dadurch gekennzeichnet, daß zunächst die Stromquelle (18) eingeschaltet und damit zwischen Brennerelektrode (15) und Werkstück (12) eine Betriebsspannung angelegt wird, daß anschließend der Brenner (10) solange gegen das Werkstück (12) bewegt wird, bis zwischen der Elektrode (15) und dem Werkstück (12) der Licht-/Plasmabogen zündet und, daß der beim Ausbilden des Licht-/Plasmabogens entstehende Spannungsabfall erfaßt und hieraus das Höhensignal gebildet wird.

2. Vorrichtung zur Durchführung des Verfahrens nach Anspruch 1, mit einem Licht- oder Plasmabogenbrenner (10), einer Höhenverstellvorrichtung (11) für den Brenner (10) sowie einer an den Brenner (10) sowie am Werkstück (12) angeschlossenen Stromquelle (18) zur Versorgung des Licht- oder Plasmabogens, dadurch gekennzeichnet, daß zwischen Brennerelektrode (15) und Werkstück (12) ein Spannungssensor (23) angeschlossen ist, und, daß der Spannungssensor (23) an eine Motorsteuerung (29) des Höhenverstellmotors (14) geschaltet ist, welche mit einer an sich bekannten Höhenregelung (30) in Verbindung steht.

3. Vorrichtung nach Anspruch 2, dadurch gekennzeichnet, daß der Spannungssensor (23) eine Zenerdiode ist, die an einen ohmschen Spannungsteiler (24) angeschlossen ist.

4. Vorrichtung nach Anspruch 2, dadurch gekennzeichnet, daß der Spannungssensor (23) ein Spannungskomparator ist.

5. Vorrichtung nach Anspruch 3, dadurch gekennzeichnet, daß der Spannungsteiler (24) ein Digitalvoltmeter mit hoher Meßrate und Digitalausgang zur Erfassung des Spannungsabfalls bzw. Spannungssprungs ist.

6. Vorrichtung nach Anspruch 2, dadurch gekennzeichnet, daß zwischen Spannungssensor (23) und Motorsteuerung (29) ein Optokoppler zur galvanischen Trennung (28) geschaltet ist.

7. Vorrichtung nach Anspruch 2, dadurch gekennzeichnet, daß zwischen Spannungssensor (23) und Motorsteuerung (29) ein Trennverstärker zur galvanischen Trennung (28) geschaltet ist.

8. Vorrichtung nach einem der Ansprüche 2 bis 7, mit einem an der Düse des Brenners angeschlossenen Hilfsstromkreis zur Bildung eines Pilotlichtbogens, dadurch gekennzeichnet, daß zwischen Hilfsstromkreis (32) und Werkstück (12) ein Spannungskomperator (31) geschaltet ist, der beim Erreichen einer vorgegebenen Differenzeingangsspannung ein Ausgangssignal zum Abstellen der Brennerbewegung erzeugt.

**Claims**

1. Method of automatically setting the initial height (13) of an electric arc torch or plasma arc torch, preferably of a plasma cutting torch (10) in which the torch (10) is moved by means of a height-adjusting device (11) towards the workpiece (12), a height signal is formed for adjusting the initial height (13) and the movement of the torch (10) is halted by the height signal, torch electrode (15) and workpiece being connected to a power source (18) supplying the arc or plasma arc, characterized in that firstly the power source (18) is switched on and consequently an operating voltage is applied between torch electrode (15) and workpiece (12), in that subsequently the torch (10) is moved towards the workpiece (12) until the electric arc/plasma arc ignites between the electrode (15) and the workpiece (12) and in that the voltage drop occurring upon creation of the electric arc/plasma arc is recorded and the height signal is formed therefrom.

2. Device for carrying out the method according to Claim 1, having an electric arc torch or plasma arc torch (10), a height-adjusting device (11) for the torch (10) and a power source (18), connected to the torch (10) and at the workpiece (12), for supplying the electric arc or plasma arc, characterized in that a voltage sensor (23) is connected between torch electrode (15) and workpiece (12) and in that the voltage sensor (23) is connected to a motor control (29) of the height-adjusting motor (14), which is in connection with a height control (30) known per se.

3. Device according to Claim 2, characterized in that the voltage sensor (23) is a Zener diode, which is connected to an ohmic voltage divider (24).

4. Device according to Claim 2, characterized in that the voltage sensor (23) is a voltage comparator.

5. Device according to Claim 3, characterized in that the voltage divider (24) is a digital voltmeter of high measuring rate and digital output for recording the voltage drop or voltage jump.

6. Device according to Claim 2, characterized in that an optocoupler is connected between voltage sensor (23) and motor control (29) for galvanic separation (28).

7. Device according to Claim 2, characterized in that an isolation amplifier is connected between voltage sensor (23) and motor control (29) for galvanic separation (28).

8. Device according to one of Claims 2 to 7, having an auxiliary circuit connected at the nozzle of the torch for forming a pilot arc, characterized in that a voltage comparator (31) which, on reaching a predetermined differential input voltage, generates an output signal for switching off the torch movement is connected between auxiliary circuit (32) and workpiece (12).

**Revendications**

1. Procédé de réglage automatique de la hauteur initiale (13) d'un chalumeau à l'arc électrique ou au plasma, de préférence d'un chalumeau de découpage au plasma (10), procédé selon lequel on rapproche le chalumeau (10) de la pièce (12) par un dispositif de réglage en hauteur, on forme un signal de hauteur pour régler la hauteur initiale (13) et on retient le mouvement du chalumeau (10) par le signal de hauteur, l'électrode (15) du chalumeau et la pièce étant reliées à une source de courant électrique (18) qui alimente l'arc électrique ou l'arc au plasma, procédé caractérisé en ce qu'on branche tout d'abord la source de courant (18) en appliquant une tension de fonctionnement entre l'électrode de chalumeau (15) et la pièce (12), puis on rapproche le chalumeau (10) vers la pièce (12) jusqu'à ce qu'un arc électrique/arc au plasma s'établisse entre l'électrode (15) et la pièce (12) et on détecte la chute de tension qui s'établit lorsque se forme l'arc électrique/arc au plasma et on en déduit un signal de hauteur.

2. Dispositif pour la mise en œuvre du procédé selon la revendication 1 comportant un chalumeau à l'arc électrique ou au plasma (10), un dispositif de réglage en hauteur (11) du chalumeau (10) ainsi qu'une source de courant (18) reliée au chalumeau (10) et à la pièce (12) pour alimenter l'arc électrique ou arc au plasma, dispositif caractérisé en ce qu'entre l'électrode (15) du chalumeau et la pièce (12), il est prévu un capteur de tension (23) qui est relié à une commande de moteur (29) du moteur (14) de réglage de hauteur relié de manière connue en soi au moyen de réglage de hauteur (30).

3. Dispositif selon la revendication 2, caractérisé en ce que le capteur de tension (23) est une diode Zener reliée à un diviseur de tension (24) ohmique.

4. Dispositif selon la revendication 2, caractérisé en ce que le capteur de tension (23) est un comparateur de tension.

5. Dispositif selon la revendication 3, caractérisé en ce que le diviseur de tension (24) est un voltmètre numérique à vitesse de mesure élevée et sortie numérique pour détecter la chute de tension ou le saut de tension.

6. Dispositif selon la revendication 2, caractérisé par un coupleur optique entre le capteur de tension (23) et la commande de moteur (29) pour assurer la séparation galvanique (28).

7. Dispositif selon la revendication 2, caractérisé par un amplificateur de séparation entre le capteur de tension (23) et la commande de moteur (29) pour assurer la séparation galvanique (28).

8. Dispositif selon l'une des revendications 2 à 7 comportant un circuit électrique auxiliaire relié à la buse du brûleur pour former un arc électrique pilote, dispositif caractérisé par un comparateur de tension (31) entre le circuit de courant auxiliaire (32) et la pièce (12), comparateur qui, lorsqu'on atteint une différence de tension d'entrée prédéterminée, fournit un signal de sortie pour arrêter le mouvement du chalumeau.

# FIG.1

FIG. 2

EP 0 199 937 B1